# EUROPEAN PATENT SPECIFICATION

(11) **EP 0 379 989 B1**
(45) Date of publication and mention of the grant of the patent: **21.04.1993**
(21) Application number: 90101079.3
(22) Date of filing: 19.01.1990
(51) Int. Cl.: F24F 5/00, F24F 11/053

(54) **A prefabricated air conditioning system for the air-conditioning of a building**
Vorgefertigtes Klimatisierungssystem für die Klimatisierung eines Gebäudes
Un système préfabriqué de condionnement d'air pour le conditionnement d'air d'un édifice

(30) Priority: 26.01.1989 IT 1919589
(43) Date of publication of application: 01.08.1990
(73) Proprietor: CONSIGLIO NAZIONALE DELLE RICERCHE, I-00100 Roma (IT)
(72) Inventor: Meroni, Italo, c/o Istituto Centrale per l'Indust., I-20098 San Giuliano Milanese (IT); Scamoni, Fabio, c/o Istituto Centrale per l'Indust, I-20098 San Giuliano Milanese (IT)
(74) Representative: Bianchetti, Giuseppe

(56) References cited:
- EP-A- 0 072 442
- EP-A- 0 184 887
- EP-A- 0 342 166
- DE-A- 3 613 942
- GB-A- 2 199 935

## Description

This invention relates to a prefabricated air conditioning system for the air conditioning of a building.

Air conditioning systems for buildings are already known. However, besides being unable to meet all of the requirements for a building, these known systems are complicated in construction, difficult to install and, thus, very expensive, as see GB-A-2199935

It is an object of this invention to provide a building air conditioning system which is extremely simple in conception and low in cost, which is capable of independent operation and which is adaptable to any type of building for controlling heat exchanges that occur between the indoor and outdoor environment through the building walls whether these are transparent or not.

The air conditioning system of the invention, which is particularly designed to be integrated into a south-facing front of a building, substantially comprises two modular parts: a prefabricated, multilayer, non-transparent component, possibly integrated with a trasparent component, such for example a window or door frame, and an energy management module which forms a plant-engineering part of the system, many of these modular parts being able to be interassembled, both in a direction of width and height, so as to obtain a building face of a desired size.

The prefabricated multilayer component substantially comprises, from the inside towards the outside, a bearing wall preferably made from lightened concrete having an electrically welded wire net buried in it, an insulation layer, an air space and an exterior sheathing preferably of a fiber-reinforced cement.

The energy management module is preferably mounted on the top of the prefabricated component and it contains in its inside the devices which provide for ventilation, air-flow conveyance and direction, as well as for energy storage necessary to operate the devices.

In particular, this module includes a hood serving the purpose of collecting the air flow from the air space to direct it through proper gate means either towards the outside or towards the inside, with the aid of a fan if necessary.

The energy management module is fabricated from low conductivity materials such, for example, as plastics and/or composite materials with the vacant spaces being filled with insulation materials, such as plastic foams, mineral wool, etc., in order to achieve a heat transfer rate which is as near as possible to that of the wall.

In addition, soundproofing of the fan and the gate operating devices is provided, should the noise level exceed the limit imposed by current regulations.

The air conditioning system of the invention can work according to two preselected modes of operation so as to have a heat gain effect in winter season and a heat removal effect in summer season.

Further features and advantages of the invention will appear from a reading of the following detailed description of one embodiment thereof shown by way of a non restrictive example by the accompanying drawings, wherein:
- Figures 1 to 4 are an external view, an internal view, a vertically sectional view and a longitudinally sectional view, respectively, of an air conditioning system according to the invention;
- Figure 5 is a perspective cutaway view of a prefabricated multilayer component making a part of an air conditioning system according to the invention;
- Figure 6 is a perspective view of a wire net designed to be let into the bearing wall or layer of the prefabricated component;
- Figure 7 is a perspective detail view showing a bush mean designed to be buried in the bearing layer of the prefabricated panel and serving both as a means for handling this panel, and for fixing the energy management module to it;
- Figure 8 is a part external view showing an upper part of an air conditioning system with the exterior sheathing removed;
- Figure 9 is a perspective exploded view of an energy management module according to the invention;
- Figure 10 is a perspective view schematically showing a hood of the module in figure 9;
- Figure 11 is a vertically sectional view taken along the line XI-XI in figure 8;
- Figure 12a and 12b are schematic views showing operation under winter conditions of an air conditioning system according to the invention;
- Figure 13a, 13b, 13c are schematic views showing operation under summer conditions of an air conditioning system according to the invention;
- Figure 14 is a block diagram representing operation under winter conditions;
- Figure 15 is a block diagram representing operation under summer conditions.

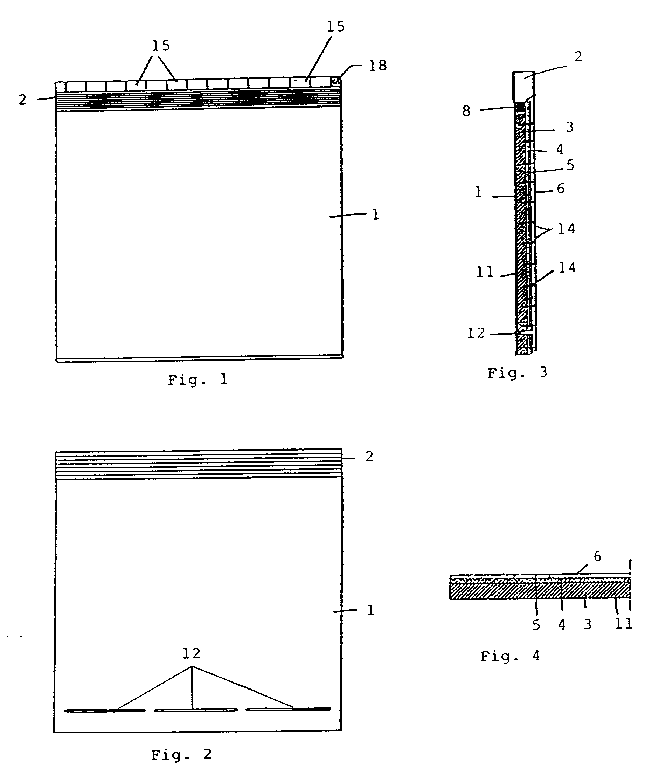

As shown by schematic views of figures 1 and 2, a prefabricated system for the air conditioning of a building according to the invention comprises e prefabricated multilayer non-trasparent component or panel 1, topped by an energy management module 2 which forms a plant-engineering part of the system.

The system of the invention, wich is particularly designed to be integrated into a south-facing front of a building so that maximum energy exchange can be obtained, is of a modular type which means that it is able to be assembled with as many similar system as are necessary to give the building's face the desired dimensions both in vertical and horizontal direction.

Moreover, the system can be integrated with transparent components such, for example, as window and door frames to increase adaptability of the system to specific requirements of the building's faces.

The prefabricated multilayer component 1 of the system substantially comprises, going from the inside towards the outside, a bearing layer or wall 3, an insulation layer 4, an air space 5 and an exterior shield element 6.

The interior bearing layer 3 is a panel preferably made of lightened concrete and is arranged for permitting fastening thereof to the bearing structure of a building, for integration of the energy management module, and for allowing interconnection of several modules in a manner to ensure static condition.

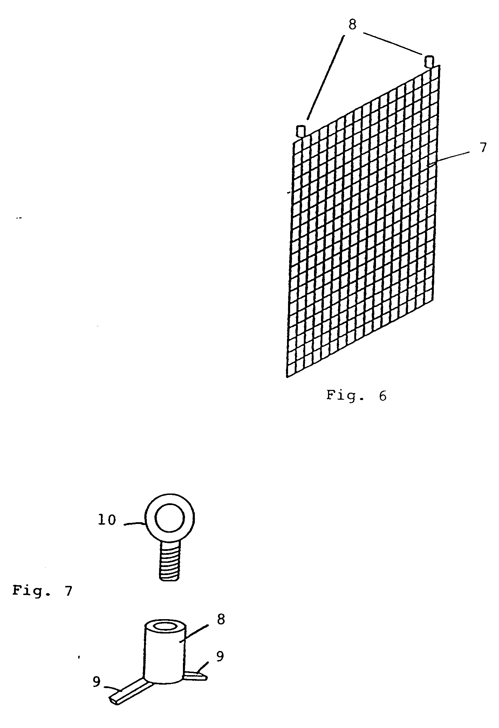

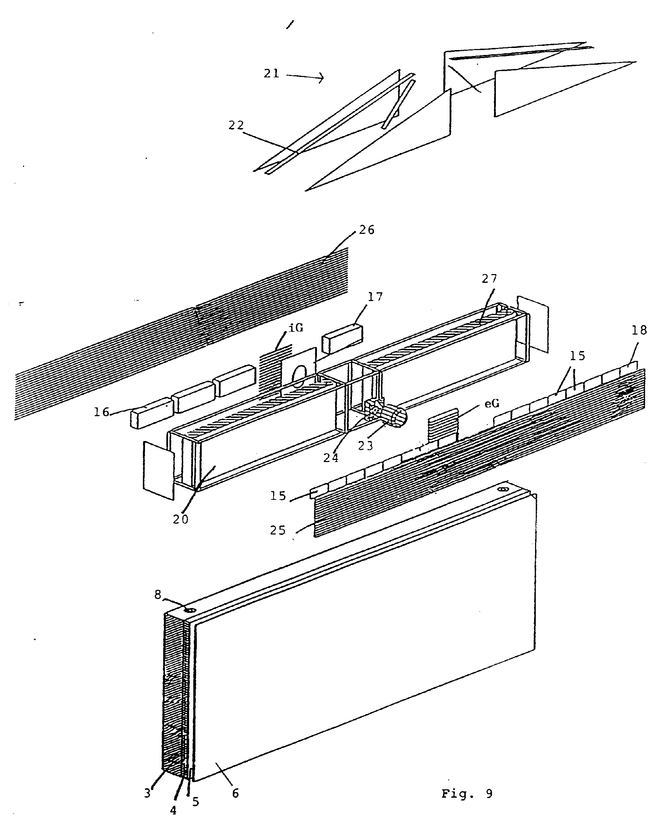

Buried in this layer 3 is an electrowelded wire net 7 (figure 5 and 6) for giving the bearing structure the required rigidity.

The wire net 7 has two threaded bushes 8 fastened to its top, which bushes are provided at their bottom with respective pairs of rag bolts 9 (figure 7). The bushes 8 are let into the bearing layer 3 during casting and serve the double purpose of enabling the component to be handled by means of eye hooks (figure 7) and the module 2 to be fixed in place.

A coating 11, in particular a white coat, is applied to the inside face of the bearing layer 3.

The component 1 has louvers 12 formed in a lower part thereof, these louvers 12 passing through both the bearing layer 3 and the insulation layer 4 and, thus, communicating with the air space 5 to ensure air recirculation.

The insulation layer 4 is preferably made from dark colored polystyrene foam sheet in order to enhance radiative exchanges between the capturing surface and the insulating surface in the interspace. These foam sheets are of a rebated type in order to avoid thermal bridging and are firmly fixed to the bearing panel 3 by means of mechanical fasteners or by spot glueing.

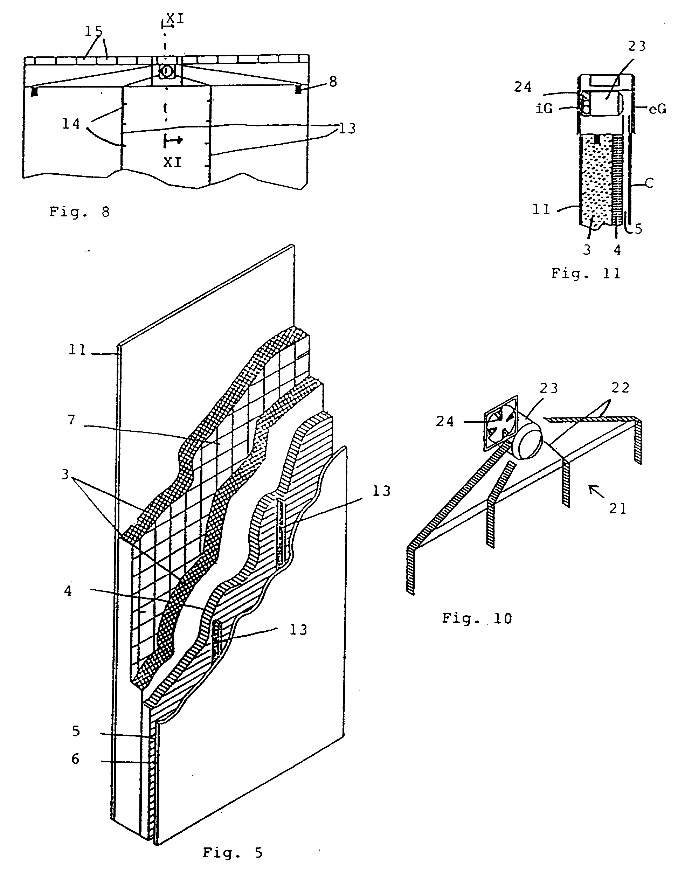

The air space 5 is formed between the insulation layer 4 and the exterior sheathing or shield element 6. Provided in this interspace 5 are air conveying means 13 carried by the external shield element 6 and acting to channel the air flow so as to avoid lateral recirculation of air (figures 5 and 8). The interspace 5 is closed on the lateral sides by a border and is protected on the bottom side by means of a wire gauze preventing insects and any foreign matter from having access.

The exterior sheathing 6 is a panel preferably made of glass wool-reinforced cement having lightness, chemical agent resistance and good heat conductivity properties. This panel is anchored to the bearing indoor layer 3 by the aid of steel wires 14 buried in the cement during cement casting operation and then in the concrete bearing structure 3.

The energy management module 2, which is fitted at the top of the prefabricated multilayer component 1, is a modular component capable of providing management of heat flows through the dynamic wall-system of which this modular component is a plant-engineering part.

This module 2 provides for bidirectional flow of air between the indoor and outdoor environment and through the air space 5 of the wall dividing the two environmental areas to permit selection of the indoor-outdoor, outdoor-indoor, outdoor-outdoor cycles of flow.

The module 2 is a fully independent unit in respect of energy demand and a fully automatized unit in respect of its operation. Energy independence is provided by a properly dimensioned photovoltaic cell plant 15 complete with storage batteries 16 (figure 9). Automation is provided by an electronic control unit 17 interfacing with heat sensing means 18 to decide operation of electrical parts according to preset programs. In any case, the module 2 may be supplied with current from a main power supply through use of a transformer.

The constructional part of the energy management module 2 will now be described more in detail with particular reference to figure 9.

It consists of a bearing frame 20 which is mounted on the top of prefabricated component 1 and is fixed to said bushes 8. The frame 20 is preferably, made of steel so as to give the module the required strength to permit further systems to be superimposed, if desired.

In the inside of frame 20 are located all of the devices designed to provide ventilation, air flow conveyance and direction, as well as the means for storing the energy that is necessary to operate said devices.

More particularly, a hood 21 is provided which serves the purposes of collecting the air flow from interspace 5, making it even and directing the same either out- or in-wardly.

The hood 21 is equipped with suitable air conveying means 22 and it encloses in a middle portion thereof a tapered conduit 23, preferably of circular cross-section, which houses in the inside of its inwardly directed end, an axial fan 24 acting to force the air flow either towards the indoor- or towards the outdoor environment.

The conduit 23 has gates iG and oG arranged at its inwardly and outwardly directed open ends, respectively, said gates being operated for opening and closing them by electrical pulses from an electromagnetic device.

Also housed in frame 20 are the electronic control unit 17, the storage batteries 16 as well as electronic cards and their connected probes.

The frame 20 is closed externally by a screen member 25 having a bank of photovoltaic cells 18 arranged thereon.

On its internal side, the frame 20 is closed by an openable door 26 which besides giving the module a good appearance, permits inspection of the module in all its parts; the rest of the frame sides being closed by fixed paneling.

Because of the module 2 representing a heat dissipation bridge through the building wall, use is made of low conductivity materials, such as plastic and/or composite materials, for the fabrication of this module and vacant spaces are filled with insulation materials 27 such as plastic foams, mineral wool and the like, so as to obtain a heat transfer rate which is as near as possible the one of the wall.

Furthermore, the system provides soundproofing for the fan 24 and the devices actuating the gates or grating, should the noise the limits imposed by regulations in force.

The system of the invention can work according to two modes of operation that are preselected depending on the season; namely, for gaining heat in winter and for removing heat in summer.

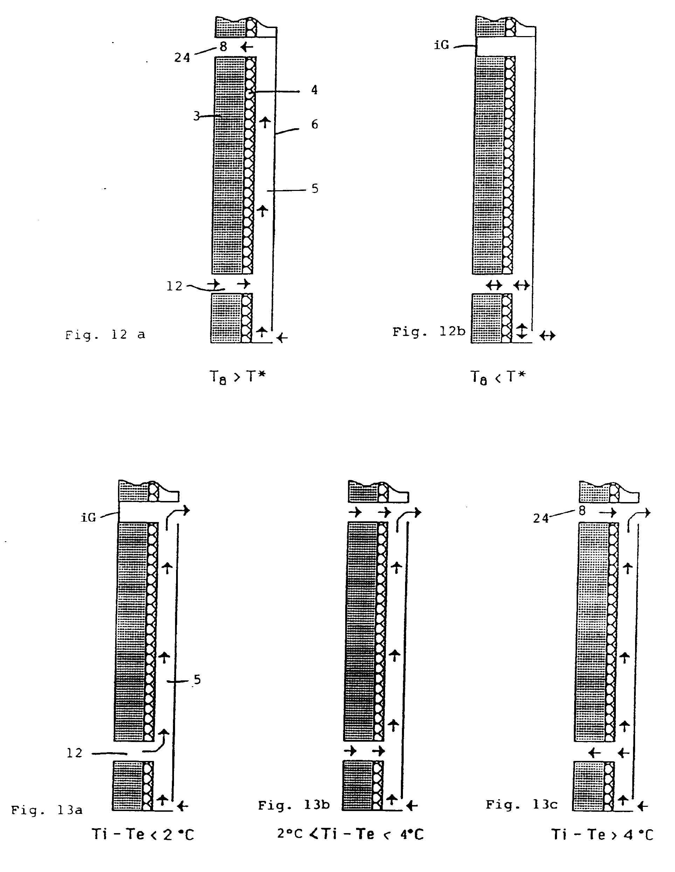

These two modes of operation will now be described with particular reference to figures 12 to 15.

### Winter operation : gain of heat

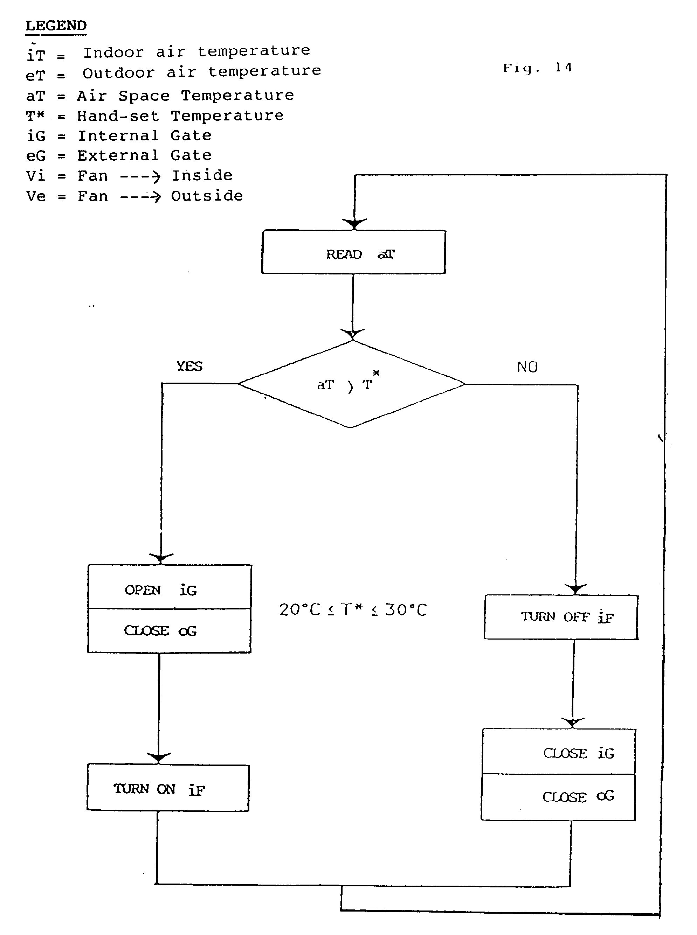

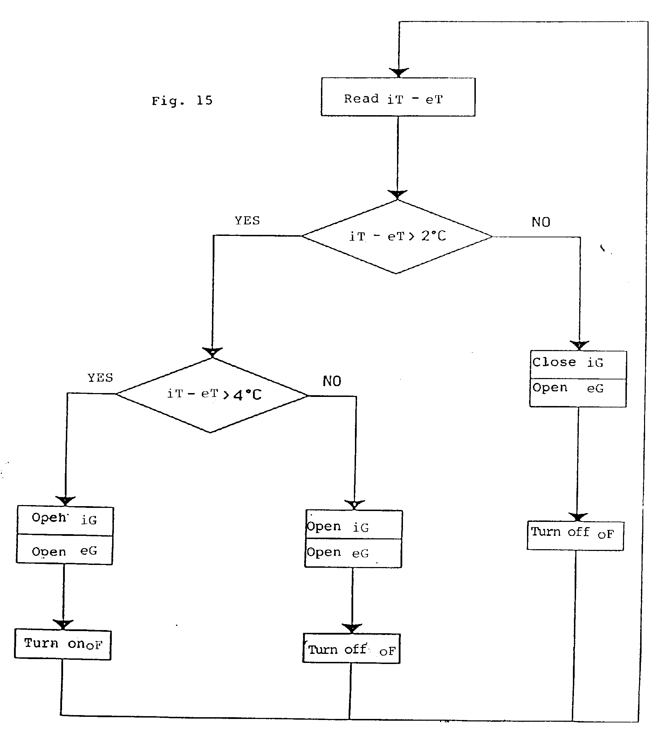

This is mode of operation of the system is for the purpose of utilizing heating of air mass existing in interspace 5 to transfer warmth to indoor environment; is schematized in figures 12a and 12b as well as in block diagram figure 14, whose explanatory notes at the upper left side also apply to block diagram figure 15.

When temperature of air aT in interspace 5 attains a set value of T* ranging from 20 to 30°, the energy management module 2 acts to deflect air flow from the outside towards the inside to admit warm air to the indoor environment through fan 24 (iF) which permits increased removal of the heat from interspace 5. Air from the outside will mix in part with internal change air which goes out through louvers 12 in lower part of the wall, thereby to permit recovery of heat of the changed air (figure 12a).

In the case of temperature aT of air in interspace 5 being less than T* (night condition or day condition with no sun), the energy management module 2 will keep gates iG and oG closed to avoid heat losses to the outside. The louvers 12 in the wall provide for normal recirculation of air (Figure 12b).

### Summer operation : removal of heat

In the case, the system is to avoid overheating of air in the indoor environment by removing heat therefrom and transferring removed heat to the outside. Three dynamics of operation are provided:
- should the difference between the indoor temperature iT and the outdoor temperature oT be less than 2°C, the module 2 will keep the outer gate oG open and the system will work as a normally ventilated wall with, in addition, the possibility of air renewal (figure 13a);
- should the difference between indoor temperature iT and outdoor temperature oT be more than 2°C but less than 4°C, then the module 2 will open both the gates iG and oG to permit a natural flow of heat to occur from indoor environment towards the outside (figure 13b);
- should the difference between indoor temperature iT and outdoor temperature oT be more than 4°C, the module 2, in addition to open gates iG, oG, will cause actuation of fan 24 (oF) so as to force air withdrawal from indoor environment until an indoor temperature is attained which is 2°C higher, at a maximum, than outdoor temperature (figure 13c).

Clearly, the difference between indoor temperature iT and outdoor temperature oT which causes actuation of the gates iG, oG and the fan 24, may be selected to be other than the above-specified value which, though being a preferred value, has been given by way of example only.

## Claims

1. A prefabricated air conditioning system for the air conditioning of a building which is preferably intended for integration into a south-facing front of a building and which can be assembled with as many equal systems as are necessary to give the building's face the desired dimensions both in vertical and horizontal direction, the system comprising a prefabricated multilayer component (1) having an air space (5) formed therein, and, fitted at the top of component (1), an energy management module (2) making the plant-engineering part of the system which provides for bidirectional flow of air between the indoor and outdoor environment and through said air space (5), louvers (12) being formed in a lower part of prefabricated component (1) in communication with said air space (5) to provide for air recirculation.

2. The air conditioning system according to claim 1, wherein air conveying means (13) are arranged in the interspace layer (5) of the multilayer component (1), said interspace (5) being bounded on the outer side by a shield sheathing (6) and being interfaced on the inner side with an insulation layer (4), which insulation layer (4) is fitted to an inner bearing panel (3).

3. The air conditioning system according to claim 2, wherein the outer shield sheathing (6) of the prefabricated component (1) is made from glass fiber-reinforced cement, the insulation layer (4) from polystyrene foam and the inner bearing panel (3) from lightened concrete with an electrowelded wire net (7) buried therein, the wire net (7) having threaded bushes (8) provided at its top which permit the component (1) to be handled and the energy management module (2) to be fixed in place.

4. The air conditioning system according to any of claims 1 to 3, wherein said energy management module (2) is supplied with current from a main power supply or by means of photovoltaic cells (15) placed on the outside of the building wall, and it works according to programs having been preset in an electronic control unit (17) interfacing with heat sensing means (18).

5. The air conditioning system according to claim 4, wherein said module (2) comprises a bearing frame (20) in which a hood (21) is arranged for conveying the air flow from air space (5), the hood (21) having in a central part thereof a conduit (23) provided at its inner side with a fan (24), the inwardly and outwardly directed open ends of conduit (23) being closed by respective gates (Gi) and (Ge) which can be actuated for closing and opening them by electrical pulses from an electromagnetic device.

6. The air conditioning system according to claim 5, wherein said frame (20) is closed on its inner side by an openable door which permits the module (2) to be inspected in all of its parts.

7. The air conditioning system according to any of claims 4 to 6, wherein said energy management module (2) is fabricated from low conductivity materials, such as plastics and/or composite materials, the vacant spaces being filled with insulation materials (27) such as plastics foams, mineral wool and the like, so that a heat transfer rate can be obtained which is as near as possible to that of the wall.

8. The air conditioning system according to any preceding claims, characterized in that the following mode of operation is provided under winter conditions:
- should the temperature (aT) of air in interspace (5) exceed a set value of (T*) ranging from 20 to 30°C, the inner gate (iG) is opened and the outer gate (eG) is kept closed and, at the same time, the fan (24) is actuated to deflect the air flow from exterior inwardly to admit warm air to indoor environment;
- should the temperature (aT) in interspace (5) be less than(T*), the fan (24) is switched off and both the gates (iG) and (eG) are kept closed to avoid heat losses towards the outside, the louvers (12) in lower part of prefabricated component (1) providing for normal recirculation of air.

9. The air conditioning system according to any of claims 1 to 7, characterized in that the following mode of operation is provided under summer conditions:
- should the difference between indoor temperature (iT) and outdoor temperature (eT) be less than a first preset value, e.g. 2°C, the fan (24) is off, the inner gate (iG) is kept closed and the outer gate (eG) opened so as to obtain a normally ventilated wall with, in addition, the possibility of air renewal;
- should the difference between indoor temperature (iT) and outdoor temperature (eT) range from said first preset value to a second preset value, for example 4°C, the fan (24) is still off, while both the gates (iG) and (eG) are opened so as to permit a natural flow of heat to occur from indoor environment towards the atmosphere;
- should the difference between indoor temperature (iT) and outdoor temperature (eT) be greater than said second preset value, both the gates (iG) and (eG) are opened and, moreover, the fan (24) is actuated in order to force withdrawal of air from indoor environment towards the atmosphere.

## Patentansprüche

1. Vorgefertigtes Klimatisierungssystem für die Klimatisierung eines Gebäudes, welches vorzugsweise für die Integration in eine nach Süden gewandte Front eines Gebäudes bestimmt ist, und welches mit so vielen gleichen Systemen zusammengebaut werden kann, wie notwendig sind, um der Gebäudeseite die gewünschten Dimensionen sowohl in vertikaler als auch in horizontaler Richtung zu geben, wobei das System eine vorgefertige Mehrschichtkomponente (1) umfaßt, die einen Luftraum (5) hat, der darin ausgebildet und an der Oberseite der Komponente (1) angebracht ist; ein Energiehandhabungsmodul (2), das als der anlagentechnische Teil des Systems dient, welcher für die Zwerichtungsströmung von Luft zwischen der Innenraum- und Außenaumumgebung und durch den Luftraum (5) sorgt, wobei Luftschlitze (12) in einem unteren Teil der vorgefertigten Komponente (1) in Verbindung mit dem Luftraum (5) zum Vorsehen von Luftrezirkulation ausgebildet sind.

2. Klimatisierungssystem nach Anspruch 1, worin Luftfördermittel (13) in der Zwischenraumschicht (5) der Mehrschichtkomponente (1) angeordnet sind, wobei der Zwischenraum (5) auf der äußeren Seite durch eine Schutzverkleidung (6) begrenzt und auf der inneren Seite mit einer Isolationsschicht (4) als Grenzschicht versehen ist, welche Isolationsschicht (4) an einer inneren Lagerplatte (3) angebracht ist.

3. Klimatisierungssystem nach Anspruch 2, worin die äußere Schutzverkleidung (6) der vorgefertigten Komponente (1) aus glasfaserverstärktem Zement, die Isolationsschicht (4) aus Polystyrolschaum und die innere Lagerplatte (3) aus Leichtbeton mit einem darin versenkten elektrogeschweißtem Drahtnetz (7) hergestellt ist, wobei das Drahtnetz (7) mit Gewinde versehene Buchsen (8) hat, die an seiner Oberseite vorgesehen sind, welche es ermöglichen, die Komponente (1) zu handhaben und das Energiehandhabungsmodul (2) an Ort und Stelle zu befestigen.

4. Klimatisierungssystem nach irgendeinem der Ansprüche 1 bis 3, worin das Energiehandhabungsmodul (2) mit Strom von einer Hauptstromversorgung oder mittels photovoltaischer Zellen (15), die auf der Außenseite der Gebäudewand plaziert sind, versorgt wird, und es gemäß Programmen arbeitet, die in einer elektronischen Steuer- bzw. Regeleinheit (17) voreingestellt worden sind, welche mit einer Wärmeabfühleinrichtung (18) in Schnittstellenverbindung ist.

5. Klimatisierungssystem nach Anspruch 4, worin das Modul (1) einen Lagerrahmen (20) umfaßt, in welchem eine Haube (21) zum Fördern des Luftstroms aus dem Luftraum (5) angeordnet ist, wobei die Haube (21) in einem mittigen Teil derselben eine Leitung (23) hat, die an ihrer inneren Seite mit einem Gebläse (24) versehen ist, wobei die einwärts und auswärts gerichteten offenen Enden der Leitung (23) durch jeweilige Tore (Gi) und (Ge) geschlossen sind, welche zum Schließen und Öffnen derselben mittels elektrischen Impulsen von einer elektromagnetischen Einrichtung betätigt werden können.

6. Klimatisierungssystem nach Anspruch 5, worin der Rahmen (20) auf seiner inneren Seite durch eine Öffenbare Tür geschlossen ist, welche es ermöglicht, das Modul (2) in allen seinen Teilen zu inspizieren.

7. Klimatisierungssystem nach irgendeinem der Ansprüche 4 bis 6, worin das Energiehandhabungsmodul (2) aus Materialien niedriger Leitfähigkeit hergestellt ist, wie Kunststoffen und/oder Verbundmaterialien, wobei die vakanten Zwischenräume mit Isolationsmaterialien (17) gefüllt sind, wie Kunststoffschäumen, Mineralwolle und dergleichen, so daß eine Wärmeübertragungsrate erhalten werden kann, welche so nahe wie möglich an derjenigen der Wand ist.

8. Klimatisierungssystem nach irgendeinem der vorhergehenden Ansprüche, dadurch **gekennzeichnet**, daß die folgende Betriebweise unter Winterbedingungen vorgesehen ist:
- Sollte die Temperatur (aT) der Luft in dem Zwischenraum (5) einen eingestellten Wert von (T*) übersteigen, der im Bereich von 20 bis 30°C liegt, wird das innere Tor (iG) geöffnet, und das äußere Tor (eG) wird geschlossen gehalten, und gleichzeitig wird das Gebläse (24) betätigt, um die Luftströmung vom Äußeren nach einwärts abzulenken, um warme Luft zu der Innenraumumgebung zuzuführen;
- sollte die Temperatur (aT) in dem Zwischenraum (5) weniger als (T*) sein, wird das Gebläse (14) ausgeschaltet und beide Tore (iG) und (eG) werden geschlossen gehalten, um Wärmeverluste nach dem Äußeren zu zu vermeiden, wobei die Luftschlitze (12) im unteren Teil der vorgefertigten Komponente (1) für normale Rezirkulation von Luft sorgen.

9. Klimatisierungssystem nach irgendeinem der Ansprüche 1 bis 7, dadurch **gekennzeichnet**, daß die folgende Betriebsweise unter Sommerbedingungen vorgesehen ist:
- Sollte die Differenz zwischen der Innenraumtemperatur (iT) und der Außenraumtemperatur (eT) weniger als ein erster voreingestellter Wert sein, z.B. 2°C, ist das Gebläse (24) aus, das innere Tor (iG) wird geschlossen gehalten, und das äußere Tor (eG) wird geöffnet, so daß eine normal ventilierte Wand mit dem Zusatz der Möglichkeit der Lufterneuerung erhalten wird;
- sollte die Differenz zwischen der Innenraumtemperatur (iT) und der Außenraumtemperatur (eT) im Bereich von dem ersten voreingestellten Wert und einem zweiten voreingestellten Wert sein, z.B. 4°C, ist das Gebläse (24) noch aus, während beide Tore (iG) und (eG) geöffnet werden, so daß das Auftreten einer natürlichen Strömung von Wärme von der Innenraumumgebung nach der Atmosphäre zu ermöglicht wird;
- sollte die Differenz zwischen der Innenraumtemperatur (iT) und der Außenraumtemperatur (eT) größer als der zweite voreingestellte Wert sein, werden beide Tore (iG) und (eG) geöffnet, und darüberhinaus wird das Gebläse (24) betätigt, um zwangsweise Luft aus der Innenraumumgebung nach der Atmosphäre zu zu entnehmen.

## Revendications

1. Système préfabriqué de conditionnement d'air, pour le conditionnement d'air d'un bâtiment, qui est destiné de préférence à être intégré dans la façade exposée au sud d'un bâtiment et qui peut être assemblé avec autant de systèmes identiques que nécessaire pour donner à la façade du bâtiment les dimensions désirées à la fois dans les directions verticale et horizontale, le système comprenant un élément multicouche préfabriqué (1) ayant un espace d'air (5) formé à l'intérieur et, disposé au sommet de l'élément (1), un module générateur d'énergie (2) constituant la partie active du système, qui produit un débit d'air bidirectionnel entre l'espace intérieur et l'espace extérieur et à travers ledit espace d'air (5), un volet d'aération (12) étant formé dans une partie la plus basse de l'élément préfabriqué (1) en communication avec ledit espace d'air (5) pour fournir l'air de recyclage.

2. Système de conditionnement d'air selon la revendication 1, dans lequel des moyens d'acheminement de l'air (13) sont aménagés dans la couche d'espacement (5) de l'élément multicouche (1), ledit espacement (5) étant limité du côté extérieur par un revêtement de protection (6) et étant en contact du côté intérieur avec une couche isolante (4), laquelle couche isolante (4) est fixée sur un panneau support intérieur (3).

3. Système de conditionnement d'air selon la revendication 2, dans lequel le revêtement de protection (6) de l'élément préfabriqué (1) est composé de ciment armé de fibre de verre, la couche isolante (4) de polystyrène expansé et le panneau support intérieur (3) de béton cellulaire, avec une armature en treillis soudé (7) noyée à l'intérieur, le treillis (7) ayant des douilles taraudées (8) disposées à son sommet qui permettent à l'élément (1) d'être manipulé et au module générateur d'énergie (2) d'être fixé en place.

4. Système de conditionnement d'air selon l'une quelconque des revendications 1 à 3, dans lequel ledit module générateur d'énergie (2) est alimenté en courant à partir d'une alimentation électrique principale ou par des moyens de cellules photovoltaïques (15) placées sur le côté extérieur du mur du bâtiment, et fonctionne selon des programmes ayant été préétablis dans une unité électronique de commande (17) connectée à des moyens de détection de chaleur (18).

5. Système de conditionnement d'air selon la revendication 4, dans lequel ledit module (2) comprend un cadre support (20) dans lequel une hotte (21) est agencée pour l'acheminement du débit d'air depuis l'espace d'air (5), la hotte (21) ayant une partie centrale composée d'un conduit (23) équipé sur son côté intérieur d'un ventilateur (24), les extrémités ouvertes du conduit (23) dirigées vers l'intérieur et vers l'extérieur étant fermées par des grilles respectives (Gi) et (Ge) qui peuvent être actionnées pour leur fermeture ou leur ouverture par des impulsions électriques émises par un dispositif électromagnétique.

6. Système de conditionnement d'air selon la revendication 5 dans lequel ledit cadre (20) est fermé sur son côté intérieur par une porte ouvrante qui permet d'inspecter le module (2) dans toutes ses parties.

7. Système de conditionnement d'air selon l'une quelconque des revendications 4 à 6, dans lequel ledit module générateur d'énergie (2) est fabriqué à partir de matériaux faiblement conducteurs, tels que des plastiques et/ou des matériaux composites, les espaces vides étant remplis avec des matériaux isolants (27) tels que des mousses de plastique, de la laine de roche ou similaire, de sorte qu'un coefficient de transmission de chaleur aussi proche que possible de celui du mur puisse être obtenu.

8. Système de conditionnement d'air selon l'une quelconque des revendications précédentes, caractérisé en ce que le mode de fonctionnement suivant est établi pour des conditions d'hiver :
- si la température (aT) de l'air dans l'espacement (5) excède un valeur de consigne de (T*) comprise entre 20 et 30°C, la grille intérieure (iG) est ouverte, la grille extérieure (eG) est maintenue fermée, et en même temps, le ventilateur (24) est mis en service pour diriger le débit d'air de l'extérieur vers l'intérieur afin d'admettre l'air chaud dans l'espace intérieur ;
- si la température (aT) dans l'espacement (5) est inférieure à (T*), le ventilateur (24) est arrêté et les deux grilles (iG) et (eG) sont maintenues fermées pour éviter les pertes de chaleur vers l'extérieur, les volets (12) en partie basse de l'élément préfabriqué (1) assurant le recyclage normal de l'air.

9. Système de conditionnement d'air selon l'une quelconque des revendications 1 à 7, caractérisé en ce que le mode de fonctionnement suivant est établi pour des conditions d'été :
- si la différence entre la température intérieure (iT) et la température extérieure (eT) est inférieure à une première valeur de consigne, par exemple 2°C, le ventilateur (24) ne fonctionne pas, la grille intérieure (iG) est maintenue fermée et la grille extérieure (eG) ouverte de manière à obtenir un mur normalement ventilé avec, en complément, la possibilité d'un renouvellement d'air ;
- si la différence entre la température intérieure (iT) et la température extérieure (eT) est comprise entre ladite première valeur de consigne et une seconde valeur de consigne, par exemple 4°C, le ventilateur (24) est toujours arrêté, cependant que les deux grilles (iG) et (eG) sont ouvertes de manière à permettre à un débit naturel de chaleur de se produire de l'espace intérieur vers l'atmosphère ;
- si la différence entre la température intérieure (iT) et la température extérieure (eT) est plus grande que la seconde valeur de consigne, les deux grilles (iG) et (eG) sont ouvertes et, de plus, le ventilateur (24) est mis en service dans le but de forcer l'évacuation de l'air de l'espace intérieur vers l'atmosphère.
